# FASCICULE DE BREVET EUROPEEN

(11) **EP 0 848 202 B1**
(45) Date de publication et mention de la délivrance du brevet: **05.02.2003**
(21) Numéro de dépôt: 97402854.0
(22) Date de dépôt: 27.11.1997
(51) Int. Cl.: F16L 55/033, F16L 9/12, F16L 11/12

(54) **Tube en matière plastique à propriétés acoustiques améliorées, et procédé pour fabriquer un tel tube**
Kunststoffrohr mit verbesserten, akustischen Eigenschaften und Herstellungsverfahren eines solchen Rohres
Plastic pipe with improved acoustic qualities and its method for manufacturing

(30) Priorité: 10.12.1996 FR 9615139
(43) Date de publication de la demande: 17.06.1998
(73) Titulaire: Alphacan, 78170 La Celle-Saint-Cloud (FR)
(72) Inventeur: Hugues, François, 58000 Nevers (FR); Tremillon, Jean-Michel, 78400 Chatou (FR)
(74) Mandataire: Michardière, Bernard

(56) Documents cités:
- EP-A- 0 342 181
- EP-A- 0 360 758
- EP-A- 0 509 480
- DE-U- 8 515 454
- FR-A- 2 282 593
- GB-A- 2 265 959

## Description

L'invention est relative à un tube en matière plastique, obtenu par extrusion ou par injection de matière plastique, du genre de ceux qui contiennent des charges, en particulier des charges minérales, pour améliorer les propriétés d'isolation acoustique du tube.

On connaît, d'après EP-A-0 342 181, un tube en matière plastique qui assure une amélioration de l'isolation acoustique avec une masse surfacique maintenue à une valeur relativement faible, par exemple de 4 kg/m2 , en évitant une présence importante de charges. Pour cela le tube doit comporter au moins trois couches coaxiales formées par un tube intérieur, un tube extérieur et au moins une couche intermédiaire de liaison. L'isolation acoustique est obtenue essentiellement par le fait que le tube extérieur et le tube intérieur présentent des rigidités en flexion différentes. La couche intermédiaire, d'épaisseur réduite, peut comporter des charges telles que du sulfate de baryum (BaSO4), mais la présence de charges lourdes est faible et n'a pas d'influence importante sur la masse surfacique, ni sur les conditions de fabrication.

On connaît d'après EP-A-0 254 375, des tubes en matière plastique chargés de sulfate de baryum qui présentent, par rapport aux tubes classiques, une amélioration des propriétés d'isolation acoustique.

La présence de telles charges minérales dans la résine servant à la fabrication du tube modifie la rhéologie et les propriétés abrasives de la matière. Il peut en résulter des altérations de l'état de surface de la pièce finale, et une usure plus rapide des buses d'injection ou d'extrusion.

Ces problèmes deviennent plus aigus lorsque, par exemple, on augmente la proportion de charge et/ou on utilise une charge plus efficace pour l'isolation acoustique du tube mais à effet néfaste sur la rhéologie et/ou les propriétés abrasives.

L'invention a pour but, surtout, de fournir un tube en matière plastique obtenu par extrusion ou par injection qui, tout en présentant de bonnes propriétés d'isolation acoustique grâce à une charge particulièrement efficace, présente aussi un très bon état de surface sur la pièce finale. On souhaite également que la résistance mécanique du tube et sa tenue au feu soient aussi bonnes que possible.

Il convient de noter que le terme "tube" utilisé dans la description et les revendications est à comprendre dans un sens très général comme englobant aussi des parties de tube de formes spéciales telles que des coudes ou des raccords.

Selon l'invention, un tube en matière plastique obtenu par extrusion ou par injection de matière plastique, contenant des charges pour améliorer ses propriétés d'isolation acoustique, comprend au moins deux couches coaxiales attenantes suivant une surface commune, à savoir une première couche externe et une deuxième couche située radialement à l'intérieur contenant des charges pour améliorer au moins les propriétés d'isolation acoustique, est caractérisé par le fait que la première couche externe est en matière plastique conventionnelle et que les charges de la deuxième couche sont constituées de silicate de zirconium (ZrSiO4), l'amélioration des propriétés d'isolation acoustique étant assurée par les charges de la deuxième couche.

Le silicate de zirconium (ZrSiO4) contribue non seulement à améliorer les propriétés d'isolation acoustique, mais aussi à améliorer la tenue au feu.

De préférence, le tube comprend une troisième couche coaxiale, située radialement à l'intérieur de la deuxième couche, cette troisième couche ou couche interne étant également réalisée en matière plastique conventionnelle.

La présence de la ou des couches de matière plastique conventionnelle permet lors de la fabrication, en particulier par coextrusion, de diminuer l'effet d'abrasion des charges de la deuxième couche sur le matériel d'injection ou d'extrusion. En outre, l'aspect du produit final et son état de surface sont tout-à-fait semblables à ceux des tubes classiques, ce qui facilite l'assemblage des tubes par collage, le formage d'emboîtures, tout en bénéficiant d'une bonne isolation acoustique.

L'épaisseur de la deuxième couche est d'environ 70 % de l'épaisseur totale de la paroi composite du tube. Dans le cas d'un tube en PVC (poly(chlorure de vinyle)), la deuxième couche est chargée de silicate de zirconium selon un taux de charge en poids supérieur à 50 pcr ( 50 parties pour 100 parties de résine ), ce taux de charge étant de préférence compris entre 100 pcr et 200 pcr, et pouvant atteindre 300 pcr.

L'expression abrégée "pcr" sera utilisée pour remplacer l'expression complète "..parties pour cent parties de résine ", les taux de charge étant tous exprimés en parties en poids .

De préférence, la masse volumique de la deuxième couche est comprise entre 2 et 2,5 kg/dm³.

La masse surfacique du produit final dépasse la valeur de 8 kg/m2 et est de préférence au moins égale à 10 kg/m2.

La demande de brevet JP-A-51-95449 mentionne l'intérêt de composés de zirconium, en particulier du silicate de zirconium (ZrSiO4), comme charges pour améliorer les propriétés d'isolation acoustique du PVC. Toutefois, ce document n'évoque pas les problèmes créés par l'utilisation d'une telle charge lors de la fabrication par extrusion ou injection de tubes en matière plastique, problèmes que l'invention vise à résoudre, tout en conservant les améliorations de propriétés, notamment d'isolation acoustique, dues à l'utilisation de silicate de zirconium comme charge.

Dans le cas de tubes en PVC, on utilise avantageusement, pour la deuxième couche chargée, un mélange de matière vierge et de matière recyclée, en particulier selon des taux compris entre 50 pcr et 100 pcr de matière recyclée.

L'invention est également relative à l'utilisation, pour fabriquer un tube, de matière plastique de type polyolêfine (PE = polyéthylène, PP = polypropylène, copolymère ) chargée de ZrSiO4 , cette matière étant préparée dans une phase préliminaire par compoundage (mélange) . La matière peut être obtenue à partir d'une résine sous forme de granulés et subir une première extrusion puis être soumise à une granulation et à une deuxième extrusion. L'invention consiste, mises à part les dispositions exposées ci-dessus, en un certain nombre d'autres dispositions dont il sera plus explicitement question ci-après à propos d'exemples de réalisation décrits avec référence au dessin ci-annexé, mais qui ne sont nullement limitatifs.

La Figure 1, de ce dessin est une vue schématique en perspective d'une partie de tube selon l'invention.

La Figure 2, enfin, est une section agrandie du tube de la Figure 1.

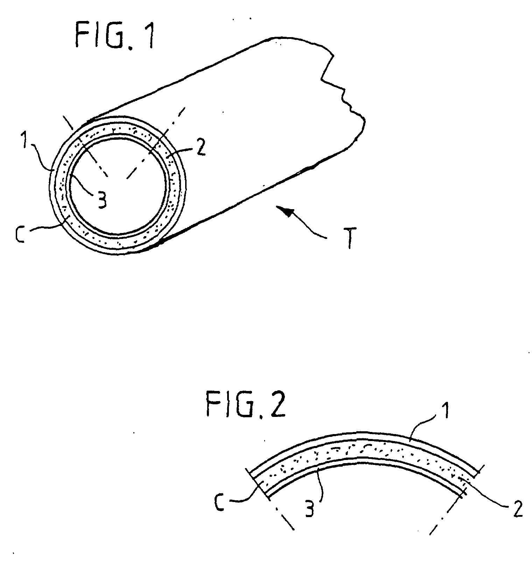

Le tube T en matière plastique montré sur la Figure 1 est destiné au transport de liquides, plus particulièrement à l'évacuation des eaux usées de sorte que la chute des liquides à l'intérieur de ce tube engendre des bruits. On a donc cherché à améliorer les propriétés d'isolation acoustique des tubes T, réalisés par extrusion ou injection à partir de matière thermoplastique, en incorporant à la matière plastique des charges, en particulier des charges minérales, propres à augmenter la masse surfacique et à améliorer l'isolation acoustique.

Ces charges viennent en plus des charges conventionnelles telles que le carbonate de calcium CaCO3, ou l'oxyde de zinc ZnO, à effet ignifuge, ou autres.

Ces charges supplémentaires, dont le taux est généralement élevé pour accroître l'effet d'atténuation acoustique, modifient la rhéologie de la matière et peuvent, d'une part, altérer l'état de surface de la pièce finale, et d'autre part accélérer l'usure du matériel servant à la production du tube du fait de l'augmentation de l'abrasivité du mélange. Cette usure peut se manifester notamment au niveau des buses d'injection ou d'extrusion et au niveau des ensembles vis/fourreau.

Selon l'invention, le tube T présente une paroi composite, comme visible sur la Figure 2, comprenant au moins une couche externe 1 en matière plastique conventionnelle et une autre couche 2 située radialement vers l'intérieur coaxiale, contenant les charges C propres à améliorer au moins les propriétés d'isolation acoustique.

De préférence une couche coaxiale interne 3 également en matière plastique conventionnelle est prévue.

La charge C de la couche 2 est avantageusement formée par du silicate de zirconium ( ZrSiO4 ) utilisé soit à son état naturel (minerai de pureté ≥ à 50 %), soit purifié.

La matière thermoplastique utilisée est préférentiellement du PVC, du polypropylène, du polyéthylène ou leurs copolymères respectifs, ou de l'ABS (copolymére acrylonitrile-butadiène-styrène).

Le taux de la charge C est ajusté de façon que la masse surfacique du produit final dépasse la valeur de 8 kg/m2, permettant ainsi de conférer au tube final un effet d'atténuation acoustique appréciable des bruits générés in situ par l'écoulement des liquides.

En particulier, dans le cas d'un tube T en PVC, la couche extérieure 1 et la couche intérieure 3 sont en formulation PVC rigide conventionnelle, habituelle pour les tubes et raccords utilisés dans le bâtiment, avec un taux de charge en poids de 0 à 30 pcr ; la couche centrale 2, ou coeur, est en PVC rigide fortement chargé de silicate de zirconium avec un taux de charge supérieur à 50 pcr, pouvant aller jusqu'à 300 pcr, et de préférence compris entre 100 pcr et 200 pcr.

La résistance au feu d'un tel produit peut lui permettre d'être classé "M1", selon des spécifications du bâtiment, avec uniquement l'addition de 0,1 à 0,2 pcr d'agents ignifugeants tels que ZnO dans les couches externe 1 et interne 3. Les fumées dégagées par l'inflammation forcée sont fortement réduites, le silicate de zirconium ayant un effet ignifugeant. La présence du silicate de zirconium autorise à ne pas introduire d'additifs d'ignifugation dans la couche centrale.

Le mélange PVC/silicate de zirconium présente une extrudabilité (aptitude à l'extrusion) meilleure qu'avec d'autres charges ; cette propriété combinée avec l'effet ignifugeant du silicate de zirconium permet l'utilisation de forts taux de PVC d'origine "recyclé bouteilles".

Il a été remarqué que l'ajout de PVC recyclé est bénéfique et conduit à une amélioration supplémentaire de l'extrudabilité, notamment au niveau de l'alimentation de la vis.

Pour la couche centrale 2 il est préconisé d'ajouter 60 pcr de matière rebroyée provenant du recyclage de bouteilles PVC, dans le cas d'un tube T en PVC. La composition et la granulométrie de ce rebroyé facilitent l'écoulement de la matière (au niveau du mélangeur et dans la trémie d'alimentation de l'extrudeuse), ainsi qu'une bonne gélification de la matière dans le corps de l'extrudeuse.

La présentation (aspect de surface) et l'utilisation (aptitude au collage) des tubes et raccords selon l'invention sont identiques à celles des tubes classiques grâce à la couche externe 1 et éventuellement la couche interne 3.

La couche externe 1 et la couche interne 3 en PVC rigide ou classique, chargé de carbonate de calcium, ont une densité d'environ 1,5.

La couche centrale 2 chargée au silicate de zirconium avec un taux de charge en poids compris entre 100 pcr et 200 pcr a une masse volumique comprise entre 2 et 2,5 kg/dm3. La couche centrale 2 a une épaisseur (dimension radiale) de l'ordre de 70 % de l'épaisseur totale de la paroi du tube T. De préférence, la masse surfacique totale est de l'ordre de 10 kg/m2.

Grâce à cette structure les exigences demandées aux tubes sont assurées : assemblage des tubes par collage, formage d'emboîtures, résistance aux agents chimiques, tenue au feu, en plus des performances d'isolement acoustique. En outre, la tenue aux chocs du tube est également améliorée.

Le silicate de zirconium présente une dureté naturelle élevée qui augmente le caractère abrasif des mélanges 1' incorporant . Grâce à la structure composite de l'invention, l'incidence de cette augmentation de caractère abrasif est atténuée pour l'extrusion des tubes PVC.

Pour obtenir un mélange PVC avec 100 pcr de silicate de zirconium, à partir d'une résine qui se présente sous forme de poudre, la préparation du mélange s'effectue sur du matériel courant.

Pour obtenir un mélange de polypropylène (PP) ou de polyéthylène (PE) avec au moins 100 pcr de silicate de zirconium, à partir d'une résine qui se présente sous forme de granulés, le passage par une première extrusion, suivie d'une granulation, puis d'une deuxième extrusion est préférable.

En conclusion, l'extrusion des tubes à structure composite de l'invention est possible avec du matériel courant. Dans le cas du PVC, l'introduction de matières rebroyées externes facilite l'écoulement des compounds (mélanges) au niveau de l'extrudeuse. La solution de l'invention permet de diminuer l'usure du matériel, et d'améliorer la tenue aux chocs du tube final.

### EXEMPLES

Pour comparer les caractéristiques mécaniques et physiques, la tenue au feu et l'isolation acoustique dues à la structure (dimensions) et aux matériaux (nature de la charge insonorisante), les tubes suivants ont été extrudés, tous avec un diamètre extérieur de 100 mm :
*Tube 1* : tube PVC à paroi compacte (une seule couche) avec 100 pcr de ZrSiO4 ; épaisseur totale de paroi 2.91 mm ; masse surfacique : 5.99 kg/m2
Tube 1bis : idem Tube 1, mais avec une épaisseur de paroi de 4,47 mm.
*Tube 2* : tube PVC à paroi compacte (une seule couche)avec 100 pcr de Ba S04; épaisseur totale de paroi 2.58 mm ; masse surfacique 5.25 kg/m2
Tube 3 : tube composite selon l'invention (trois couches : une externe et une interne en PVC conventionnel et une couche centrale ou coeur chargée) , dont le coeur est chargé avec 100 pcr de ZrSiO4; l'épaisseur totale de paroi est 4.28 mm ; masse surfacique 7.97 kg/m2.
Tube 4 : tube composite selon l'invention (trois couches : une externe et une interne en PVC conventionnel et une couche centrale ou coeur chargée), dont le coeur est chargé à 100 pcr de ZrSiO4; l'épaisseur totale de paroi est 5.5 mm ; masse surfacique 10.34 kg/m2.

### Caractéristiques mécaniques.

Les essais ont montré que les caractéristiques mécaniques des tubes 1bis, 3 et 4 étaient meilleures que celles des tubes 1 et 2, ce qui peut s'expliquer en partie par l'épaisseur totale de paroi supérieure pour les tubes 1bis, 3 et 4.

Toutefois une caractéristique mécanique très nettement améliorée est celle de la tenue aux chocs. Cette tenue est déterminée par un essai normalisé consistant à faire chuter une masse de 0.8 kg, d'une hauteur de 1.20 m , à la température de 0°C, sur le tube à essayer. On dénombre les casses produites sur une série de tubes d'un même type soumis à cet essai. Les résultats sont les suivants:
Tube 1 : 25% de casses Tube 3 : 0% de casses
Tube 1bis: 40% de casses
Tube 2 : 100% de casses Tube 4 : 3% de casses
La différence d'épaisseur de parois des tubes essayés ne peut seule expliquer cette très nette amélioration de la tenue aux chocs des tubes selon l'invention. La tenue aux chocs d'un tube n'est d'ailleurs pas forcément améliorée par l'augmentation de l'épaisseur; au contraire un tube moins épais, donc plus souple, peut mieux résister au test d'impact par chute de masse sur éprouvette annulaire, qu'un tube plus épais soumis aux mêmes conditions d'épreuve.

L'amélioration de la tenue aux chocs est due pour l'essentiel à la structure selon l'invention, avec présence d'une peau extérieure ( et généralement d'une peau intérieure ) en matière plastique conventionnelle, en particulier en PVC classique, chargée modérément.

### Comportement au feu.

Les essais ont montré que la tenue au feu est améliorée en utilisant ZrSiO4 comme charge.

L'ajout de charge insonorisante dans le coeur d'un tube composite selon l'invention conduit à une forte diminution de la production de fumées. Ces résultats ont été particulièrement bons avec le tube 4, de masse surfacique de 10.5 kg/m2.

### Isolement acoustique (Indice d'affaiblissement).

Des essais d'isolement aux bruits aériens ont été réalisés.

### Principe de la mesure:

On mesure la différence des niveaux de pression acoustique dans deux locaux séparés par une cloison acoustique traversée par le tube à tester. Une source émettrice de bruit est placée dans un des deux locaux près de l'extrémité ouverte du tube. Dans l'autre local un microphone est situé près du tube dont l'extrémité est obturée par un bouchon de laine de verre.

La différence des niveaux de pression acoustique produits entre les deux locaux est mesurée sur un spectre de large bande étalé de 630 à 10000 Hz .

La valeur mesurée est un niveau global linéaire exprimé en dB. Pour tenir compte de la sensibilité de l'oreille aux différentes fréquences, la valeur est pondérée en dB(A).

La plage de fréquence concernée par un écoulement d'eau se situe entre 1250 et 10000 Hz. Les valeurs annoncées ci-après sont des valeurs pondérées en dB(A) sur cette plage.

| Tubes | Diam. en mm | Epais. en mm | Densité paroi g/cm3 | Masse surfacique kg/m2 | *Isolement en dB(A)de 1250 à 10000Hz* |
|---|---|---|---|---|---|
| PVC cel.st | 100 | 3.2 | 0.868 | 2.78 | *42.8* |
| PVC co.st | 100 | 3.0 | 1.431 | 4.31 | *46.2* |
| Tube 3 | 100 | *4.28* | 1.862 | *7.97* | *51.3* |
| Tube 4 | *100* | *5.50* | 1.880 | *10.34* | *53.2* |
| Compact PP BaS04 | 110 | *5.64* | 1.888 | *10.65* | *53.4* |

La première colonne de ce tableau définit le type de tube: PVC cellulaire standard (PVC cel.st); PVC compact standard (PVC co.st); Tube 3 selon l'invention défini précédemment; Tube 4 selon l'invention, défini précédemment; Tube compact en polypropylène chargé de BaSO4.

Les colonnes suivantes donnent : le diamètre extérieur du tube en mm ; l'épaisseur totale de paroi en mm ; la densité de paroi en g/ cm3 ; la masse surfacique en kg/m2 et l'isolement global pondéré en dB(A) de 1250 Hz à 10000 Hz.

Les résultats d'essais montrent que le tube 4 en PVC composite de masse surfacique globale d'environ 10.30 kg/m2 assure un isolement acoustique très proche de celui d'un tube en polypropylène PP chargé en poids à 100 pcr de BaS04 dont l'épaisseur est pourtant légèrement plus forte ( *5.64* mm contre *5.50* mm ). Dans le tube 4 de l'invention seulement 70% de l'épaisseur de la paroi sont chargés.

La perte d'isolement acoustique pour le tube 3 de structure équivalente, mais d'épaisseur 4.28 mm et de masse surfacique voisine de 8 kg/m2 , est d'environ 2 dB(A).

L'amélioration d'isolement apportée par le tube 4 par rapport aux tubes traditionnels du marché est de 8 à 10 dB(A).

Il est à noter que les résultats annoncés correspondent à un montage de laboratoire qui ne tient pas compte de manière complète de la configuration réelle de pose du tube lors de son usage. Les accessoires et paramètres tels que : culotte, colliers, débit de l'eau écoulée, etc... ont aussi une incidence sur les résultats.

## Revendications

1. Tube en matière plastique obtenu par extrusion ou par injection de matière plastique, contenant des charges pour améliorer ses propriétés d'isolation acoustique, comprenant au moins deux couches coaxiales (1,2) attenantes suivant une surface commune, à savoir une première couche externe (1) et une deuxième couche (2) en matière plastique contenant des charges (C) pour améliorer au moins les propriétés d'isolation acoustique **caractérisé par** le fait la première couche (1) est en matière plastique conventionnelle, et que les charges de la deuxième couche sont constituées de silicate de zirconium (ZrSiO4), l'amélioration des propriétés d'isolation acoustique étant assurée par les charges de la deuxième couche.

2. Tube en matière plastique selon la revendication 1, **caractérisé par le fait qu'**il comprend une troisième couche coaxiale (3), située radialement à l'intérieur de la deuxième couche (2) contenant les charges, cette troisième couche (3) étant également réalisée en matière plastique conventionnelle.

3. Tube en matière plastique selon l'une des revendications précédentes, **caractérisé par le fait que** la deuxième couche (2) est en PVC chargé de silicate de zirconium ( Zr SiO₄ ) selon un taux de charge en poids supérieur à 50 pcr et pouvant atteindre 300 pcr.

4. Tube en matière plastique selon la revendication 3, **caractérisé par le fait que** le taux de charge en poids de silicate de zirconium de la deuxième couche (2) est compris entre 100 pcr et 200 pcr.

5. Tube en matière plastique selon l'une des revendications précédentes, **caractérisé par le fait que** toutes les couches de tube en matière plastique sont en PVC rigide.

6. Tube en matière plastique selon l'une des revendications précédentes, **caractérisé par le fait que** la deuxième couche (2) est à base de matière plastique recyclée, en particulier selon un taux de 60 pcr de matière rebroyée.

7. Tube en matière plastique selon la revendication 4, **caractérisé par le fait que** la masse volumique de la deuxième couche (2) est supérieure à 2kg/dm³, de préférence comprise entre 2kg/ dm³ et 2,5 kg/ dm³.

8. Tube en matière plastique selon l'une des revendications précédentes, **caractérisé par le fait que** la masse surfacique de la matière du tube est au moins égale à 10 kg/m².

9. Tube en matière plastique selon l'une des revendications précédentes, **caractérisé par le fait que** l'épaisseur de la deuxième couche (2) est de l'ordre de 70% de l'épaisseur totale de la paroi du tube.

10. Procédé pour fabriquer un tube selon la revendication 1 ou 2, **caractérisé par le fait que** l'on utilise de la matière plastique de type polyoléfine (PE = polyéthylène, PP = polypropylène, copolymère ) chargée de ZrSiO4 , cette matière étant préparée dans une phase préliminaire par compoundage.

## Patentansprüche

1. Kunststoffrohr, das durch Extrudieren oder Spritzgießen von Kunststoff hergestellt wird, das zur Verbesserung seiner Eigenschaften hinsichtlich der Schalldämmung Füllstoffe enthält und das mindestens zwei angrenzende, koaxiale Schichten (1,2) mit einer gemeinsamen Oberfläche aufweist, nämlich eine erste äußere Schicht (1) und eine zweite Schicht (2) aus Kunststoff, die zur Verbesserung zumindest der Eigenschaften hinsichtlich der Schalldämmung Füllstoffe (C) enthält, **dadurch gekennzeichnet, daß** die erste Schicht (1) aus herkömmlichem Kunststoff besteht und dadurch, daß die Füllstoffe der zweiten Schicht aus Zirconiumsilicat (ZrSiO₄) bestehen, wobei die Verbesserung der Eigenschaften hinsichtlich der Schalldämmung durch die Füllstoffe der zweiten Schicht gewährleistet wird.

2. Kunststoffrohr nach Anspruch 1, **dadurch gekennzeichnet, daß** es eine dritte koaxiale Schicht (3) aufweist, die sich radial an der Innenseite der zweiten Schicht (2), die die Füllstoffe enthält, befindet, wobei diese dritte Schicht (3) ebenfalls aus herkömmlichem Kunststoff ausgeführt ist.

3. Kunststoffrohr nach einem der vorhergehenden Ansprüche, **dadurch gekennzeichnet, daß** die zweite Schicht (2) ein PVC mit Zirconiumsilicat (ZrSiO₄) als Füllstoff ist, wobei der auf die Masse bezogene Mengenanteil des Füllstoffs über 50 pcr (Teile auf 100 Teile Harz) liegt und 300 pcr erreichen kann.

4. Kunststoffrohr nach Anspruch 3, **dadurch gekennzeichnet, daß** der auf die Masse bezogene Mengenanteil des Zirconiumsilicat (ZrSiO₄) der zweiten Schicht (2) im Bereich von 100 bis 200 pcr liegt.

5. Kunststoffrohr nach einem der vorhergehenden Ansprüche, **dadurch gekennzeichnet, daß** alle Schichten des Kunststoffrohrs aus Hart-PVC bestehen.

6. Kunststoffrohr nach einem der vorhergehenden Ansprüche, **dadurch gekennzeichnet, daß** die zweite Schicht (2) auf Recycling-Kunststoff insbesondere mit einem Gehalt von 60 pcr des zerkleinerten Materials basiert.

7. Kunststoffrohr nach Anspruch 4, **dadurch gekennzeichnet, daß** die Dichte der zweiten Schicht (2) über 2 kg/dm³ und vorzugsweise im Bereich von 2 bis 2,5 kg/dm³ liegt.

8. Kunststoffrohr nach einem der vorhergehenden Ansprüche, **dadurch gekennzeichnet, daß** die flächenbezogene Masse des Rohrmaterials mindestens 10 kg/m² beträgt.

9. Kunststoffrohr nach einem der vorhergehenden Ansprüche, **dadurch gekennzeichnet, daß** die Dicke der zweiten Schicht (2) in der Größenordnung von 70 % der Gesamtdicke der Wand des Rohres liegt.

10. Verfahren zur Herstellung eines Rohrs nach Anspruch 1 oder 2, **dadurch gekennzeichnet, daß** ein Kunststoff vom Typ Polyolefin (PE = Polyethylen, PP = Polypropylen, Copolymer) mit ZrSiO₄ als Füllstoff verwendet wird, wobei dieses Material in einem vorbereitenden Schritt durch Compoundieren hergestellt wird.

## Claims

1. Plastic pipe obtained by the extrusion or injection-moulding of a plastic, containing fillers for improving its acoustic insulation properties, comprising at least two coaxial layers (1, 2) which lie next to each other over a common surface, namely an outer first layer (1) and a second layer (2) made of a plastic containing fillers (C) in order to improve at least the acoustic insulation properties **characterized in that** the first layer (1) is made of a conventional plastic, and the fillers of the second layer are composed of zirconium silicate (ZrSiO₄), the improvement of the acoustic insulation properties being due to the fillers of the second layer.

2. Plastic pipe according to Claim 1, **characterized in that** it includes a third coaxial layer (3), lying radially on the inside of the second layer (2) containing the fillers, this third layer (3) also being made of a conventional plastic.

3. Plastic pipe according to one of the preceding claims, **characterized in that** the second layer (2) is made of PVC filled with zirconium silicate (ZrSiO₄) with a filler content by weight which is greater than 50 phr and which may be as high as 300 phr.

4. Plastic pipe according to Claim 3, **characterized in that** the filler content by weight of zirconium silicate in the second layer (2) is between 100 phr and 200 phr.

5. Plastic pipe according to one of the preceding claims, **characterized in that** all the layers of the plastic pipe are made of rigid PVC.

6. Plastic pipe according to one of the preceding claims, **characterized in that** the second layer (2) is based in recycled plastic, in particular with a content of 60 phr of reground material.

7. Plastic pipe according to Claim 4, **characterized in that** the volume mass of the second layer (2) is greater than 2 kg/dm³ and preferably between 2 kg/dm³ and 2,5 kg/dm³.

8. Plastic pipe according to one of the preceding claims, **characterized in that** the surface mass of the material of the pipe is at least equal to 10 kg/m².

9. Plastic pipe according to one of the preceding claims, **characterized in that** the thickness of the second layer (2) is about 70 % of the total thickness of the wall of the tube.

10. Process for manufacturing a pipe according to Claim 1 or 2, **characterized in that** plastic of the polyolefin type (PE = polyethylene, PP = polypropylene, copolymer). filled with ZrSiO₄ is used, this material being compounded in a preliminary compounding step.
